# EUROPEAN PATENT SPECIFICATION

(11) **EP 3 984 884 B1**
(45) Date of publication and mention of the grant of the patent: **09.07.2025**
(21) Application number: 21192529.2
(22) Date of filing: 23.08.2021
(51) Int. Cl.: B64C 39/02, B64C 5/02, B64C 1/26, B64C 3/56

(54) **MODULAR UNMANNED AERIAL VEHICLES**
MODULARE UNBEMANNTE LUFTFAHRZEUGE
VÉHICULES AÉRIENS MODULAIRES SANS PILOTE

(30) Priority: 15.10.2020 US 202063092284 P
(43) Date of publication of application: 20.04.2022
(73) Proprietor: INSITU, INC. a subsidiary of The Boeing Company, Bingen, WA 98605 (US)
(72) Inventor: NALLEY, Danny R., Bingen, 98605 (US); BROWN, Harold A., Bingen, 98605 (US); MIHAI, Ovidiu C., Bingen, 98605 (US); MUNRO, Bryan G., Bingen, 98605 (US); REITER, Joel M., Bingen, 98605 (US)
(74) Representative: Boult Wade Tennant LLP

(56) References cited:
- WO-A1-2014/025617
- WO-A1-2018/208652
- US-A1- 2015 136 897
- US-A1- 2018 086 458
- US-A1- 2018 155 021
- US-A1- 2018 370 629
- US-A1- 2019 135 424
- US-A1- 2019 168 872

## Description

### FIELD OF THE DISCLOSURE

This disclosure relates generally to aircraft and, more particularly, to modular unmanned aerial vehicles.

### BACKGROUND

In recent years, unmanned aerial vehicles (UAVs) or drones have been used to fly significant distances to transport payloads (e.g., packages, supplies, equipment, etc.) or gather information. A weight and an aerodynamic design of a UAV can affect a payload that can be carried by the UAV, as well as a flight range of the UAV. Typically, UAVs are designed for specific performance and/or mission needs.

WO 2018/208652, in accordance with its abstract, states an aircraft includes a fuselage module and at least two vertical lift rotor modules supporting at least four rotor assemblies. Each rotor assembly is supported by a rotor boom having at least one boom free end and a boom mounting portion. Each rotor assembly has at least one vertical lift rotor mounted on the boom free end. Each boom mounting potion is removably couplable to the fuselage module. The vertical lift rotor modules are configured such that when coupled to the fuselage module, a pair of the rotor assemblies are located on each of laterally opposite sides of the fuselage module, and the rotor assemblies of each pair are respectively located forward of and aft of a wing center portion. A pair of wings are configured to be removably couplable to the wing center portion. The aircraft includes a forward thrust module removably couplable to the fuselage body.

US 2018/086458, in accordance with its abstract, states that an unmanned aerial vehicle includes a fuselage, tail, wings and an adaptable payload section, alternatively or additionally, modular flight surfaces including tail, wings and motor, alternatively or additionally the vehicle is configured for short landings with reversible thrust, alternatively or additionally, the unmanned aerial vehicle is configured with direct connection to moveable flight control surfaces.

US 2018/155021, in accordance with its abstract, states a modular Unmanned Aerial System (UAS) includes an Unmanned Aerial Vehicle (UAV) parent module and UAV child modules. A main wing extends from a respective fuselage of the modules. The UAS includes docking mechanisms coupled to wingtips of the main wings. The child modules dock with the wingtips of the parent or an adjacent child module. Docking forms a linked-flight configuration, with undocking and separation from the parent or adjacent child modules achieving an independent-flight configuration. The modules have booms arranged transverse to the main wings and parallel to the longitudinal axis, as well as front and rear rotors/propellers. The front and rear propellers have axes of rotation that are normal to a plane of the longitudinal axis in a vertical takeoff and landing (VTOL) configuration, with the axis of rotation of the rear propellers parallel to the longitudinal axis in a forward-flight configuration.

US 2019/168872, in accordance with its abstract, states an aircraft has a fuselage, a wing assembly coupleable to the fuselage, and an empennage including a pair of tail booms configured to be removably coupled to the wing assembly. The wing assembly includes a pair of boom interfaces located on laterally opposite sides of the fuselage. Each tail boom has a boom forward end configuration to be mechanically attached to one of the boom interfaces using an externally-accessible mechanical fastener.

US 2015/136897, in accordance with its abstract, states an aircraft, preferably an unmanned aircraft (UAV), drone, or Unmanned Aerial System (UAS), comprising a rigid wing which enables aerodynamic horizontal flight, and at least four rotors which are driven by means of controllable electric motors and which can be pivoted between a vertical starting position and a horizontal flight position by means of a pivoting mechanism, wherein all electric motors and rotors are arranged on the wing.

WO 2014/025617, in accordance with its abstract, states an aircraft including an airframe, a pair of fins attached to a rear portion of the airframe, a pair of dihedral braces attached to a bottom portion of the airframe, a first thrust-vectoring (T/V) module and a second T/V module, and an electronics module. The electronics module provides commands to the two T/V modules. The two T/V modules are configured to provide lateral and longitudinal control to the aircraft by directly controlling a thrust vector for each of the pitch, the roll, and the yaw of the aircraft. The use of directly articulated electrical motors as T/V modules enables the aircraft to execute tight-radius turns over a wide range of airspeeds.

US 2019/0135424, in accordance with its abstract, states that an aircraft includes an airframe having a fixed-wing section and a plurality of articulated electric rotors, at least some of which are variable-position rotors having different operating configurations based on rotor position. A first operating configuration is a vertical-flight configuration in which the rotors generate primarily vertical thrust for vertical flight, and a second operating configuration is a horizontal-flight configuration in which the rotors generate primarily horizontal thrust for horizontal fixed-wing flight. Control circuitry independently controls rotor thrust and rotor orientation of the variable-position rotors to provide thrust-vectoring maneuvering. The fixed-wing section may employ removable wing panels so the aircraft can be deployed both in fixed-wing and rotorcraft configurations for different missions.

US 2018/0370629, in accordance with its abstract, states that there is provided an aircraft system in the tilt-rotor category with four propulsion units where the tilt angle and thrust of each unit is controlled independently of the other units. The tilt angle for each unit can be adjusted anywhere from below horizontal, to fully forward, and to greater than 180 degrees (i.e. tilted backwards).

### SUMMARY

According to the presently claimed invention, as defined in claim 1, there is described herein an unmanned aerial vehicle (UAV) comprising: a fuselage that extends along a longitudinal axis; a releasably couplable wing; a motor; a motor boom configured to support the motor, wherein the motor boom is configured to be swivelled and/or rotated relative to the fuselage and/or the releasably couplable wing; a wing support frame extending from the fuselage and along a wingspan of the unmanned aerial vehicle, the wing support frame having distal ends to support: the releasably couplable wing, the releasably couplable wing to extend along the wingspan when coupled to the wing support frame, and the motor boom such that the motor boom extends parallel to the longitudinal axis and supports the motor that is oriented to generate lift for the unmanned aerial vehicle; and a releasably couplable tail boom, wherein the tail boom supports a combined rudder-elevator, and wherein the combined rudder-elevator swivels relative to the tail boom.

According to the presently claimed invention, as defined in claim 10, there is also described herein, a method comprising: coupling a fuselage that extends along a longitudinal axis to a wing support frame, the wing support frame extending from the fuselage and along a wingspan of an unmanned aerial vehicle (UAV); releasably coupling a wing to a distal end of the wing support frame, the wing to be releasably coupled to the wing support frame at the distal end, the distal end to support a motor boom that is parallel to the longitudinal axis; coupling the motor boom to the wing support frame, wherein the motor boom supports a motor, and wherein the motor boom is configured to be swivelled and/or rotated relative to the fuselage and/or the wing; coupling a tail boom to the fuselage; and coupling a combined rudder/elevator to the fuselage, wherein the combined rudder-elevator swivels relative to the tail boom.

### BRIEF DESCRIPTION OF THE DRAWINGS

FIG. 1 is an example unmanned aerial vehicle (UAV).
FIG. 2 depicts an example rotor configuration.

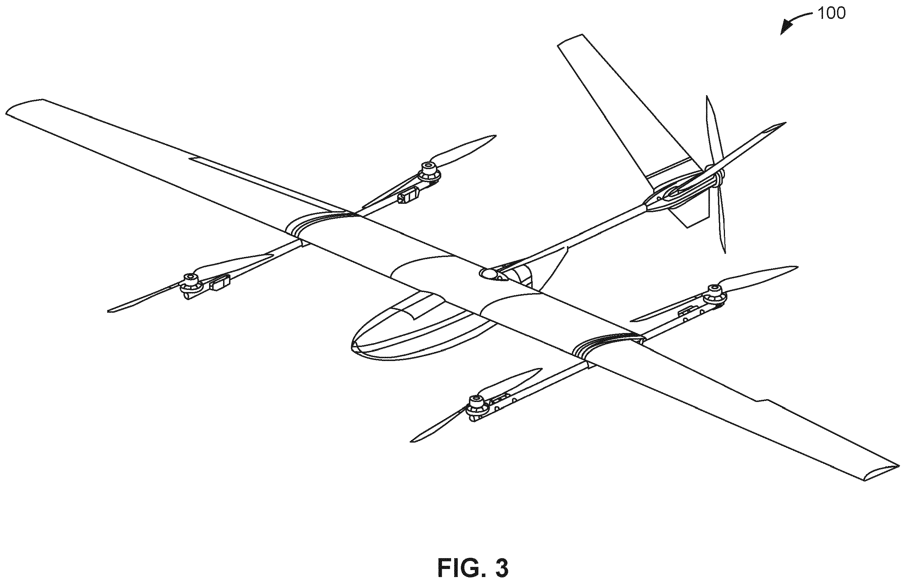

FIG. 3 is a perspective view of the example UAV of FIGS. 1 and 2.

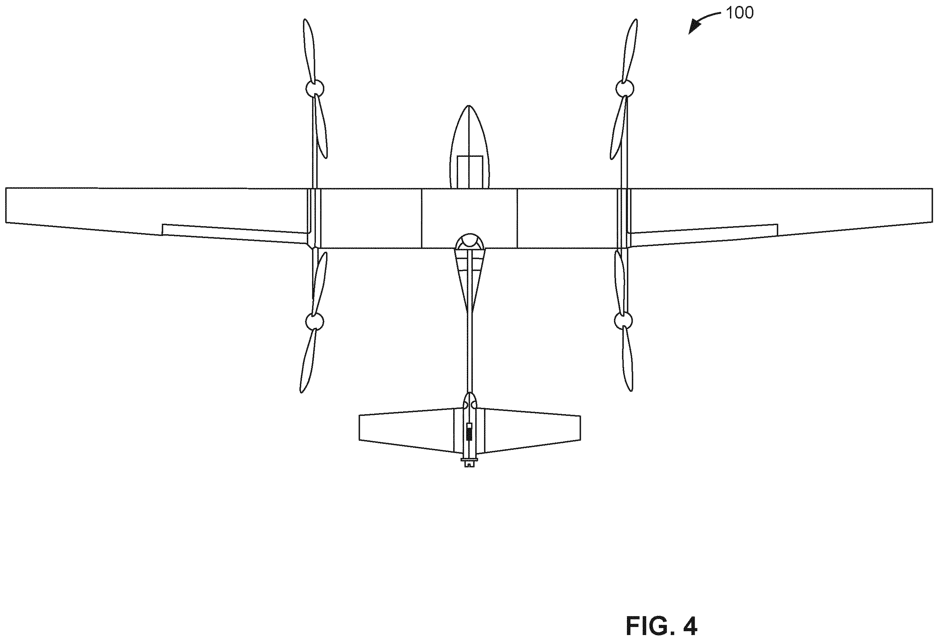

FIG. 4 is a top view of the example UAV of FIGS. 1-3.

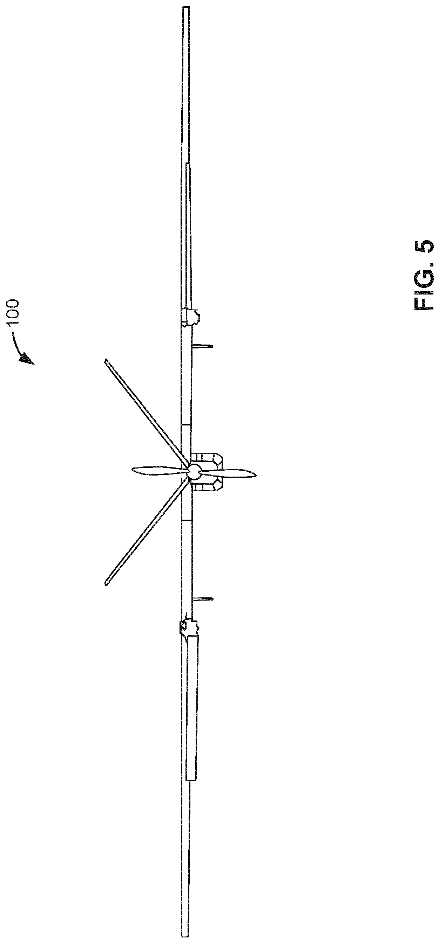

FIG. 5 is a rear view of the example UAV of FIGS. 1-4.

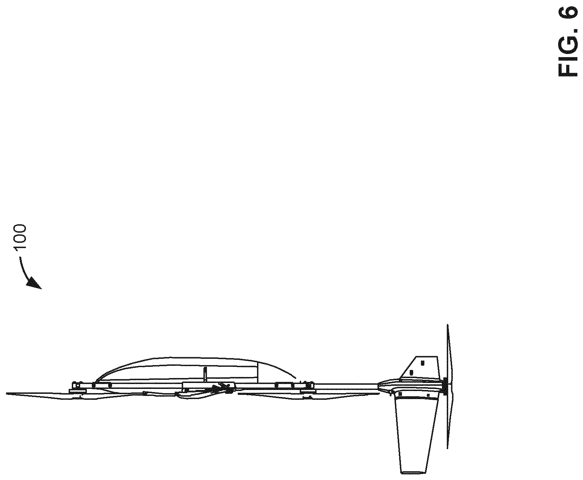

FIG. 6 is a side view of the example UAV of FIGS. 1-5.

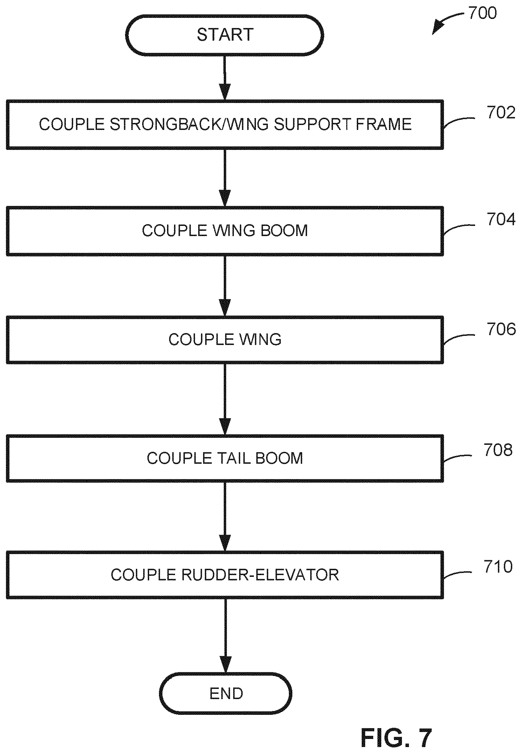

FIG. 7 is a flowchart representative of an example method to implement the example UAV of FIGS. 1-6.

The figures are not to scale. Instead, the thickness of the layers or regions may be enlarged in the drawings. In general, the same reference numbers will be used throughout the drawing(s) and accompanying written description to refer to the same or like parts. As used herein, unless otherwise stated, the term "above" describes the relationship of two parts relative to Earth. A first part is above a second part, if the second part has at least one part between Earth and the first part. Likewise, as used herein, a first part is "below" a second part when the first part is closer to the Earth than the second part. As noted above, a first part can be above or below a second part with one or more of: other parts therebetween, without other parts therebetween, with the first and second parts touching, or without the first and second parts being in direct contact with one another. As used in this patent, stating that any part is in any way on (e.g., positioned on, located on, disposed on, or formed on, etc.) another part, indicates that the referenced part is either in contact with the other part, or that the referenced part is above the other part with one or more intermediate part(s) located therebetween. As used herein, connection references (e.g., attached, coupled, connected, and joined) may include intermediate members between the elements referenced by the connection reference and/or relative movement between those elements unless otherwise indicated. As such, connection references do not necessarily infer that two elements are directly connected and/or in fixed relation to each other. As used herein, stating that any part is in "contact" with another part is defined to mean that there is no intermediate part between the two parts.

Unless specifically stated otherwise, descriptors such as "first," "second," "third," etc. are used herein without imputing or otherwise indicating any meaning of priority, physical order, arrangement in a list, and/or ordering in any way, but are merely used as labels and/or arbitrary names to distinguish elements for ease of understanding the disclosed examples. In some examples, the descriptor "first" may be used to refer to an element in the detailed description, while the same element may be referred to in a claim with a different descriptor such as "second" or "third." In such instances, it should be understood that such descriptors are used merely for identifying those elements distinctly that might, for example, otherwise share a same name. As used herein, "approximately" and "about" refer to dimensions that may not be exact due to manufacturing tolerances and/or other real world imperfections.

### DETAILED DESCRIPTION

Modular unmanned aerial vehicles (UAVs) are disclosed. Some known UAVs have a limited flight range based on weight (e.g., structural weight, fuel carried, payload, etc.), as well as aerodynamic design. Further, to save on weight, known UAVs are not generally customizable or adaptable due to additional structures or weight corresponding to such customizability. In other words, most known UAVs are designed for specific application needs (e.g., mission needs, payload requirements, etc.) and many different UAVs are usually purchased, utilized and maintained to meet varying application needs.

Examples disclosed herein enable UAVs that are lightweight, highly maneuverable, highly adaptable and relatively low cost. Examples disclosed herein are modular to enable different components to be replaced and/or swapped for different applications, thereby enabling the UAVs to be versatile for different applications.

Examples disclosed herein include a UAV having a fuselage that extends along a longitudinal axis. A wing support frame, which may also be referred to herein as a strongback, extends from the fuselage and along a wingspan of the UAV. The wing support frame has distal ends to support a releasably couplable wing and a motor boom that extends parallel to the longitudinal axis (e.g., within 5 degrees of the longitudinal axis).

In some examples, the wingspan is 4.85 to 5.05 meters (m) or approximately 4.85 to approximately 5.05 m. According to the presently claimed invention, the UAV includes a releasably couplable tail boom. The tail boom supports a combined rudder-elevator that swivels relative to the tail boom. The combined rudder-elevator is releasably couplable to the tail boom. In some examples, the motor boom is at least partially composed of carbon fiber. Additionally or alternatively, the motor boom is releasably couplable to the wing support frame. In some examples, the motor boom mounts a first motor and a second motor on an opposite side of the wing support frame and/or the wing.

As used herein, the term "releasably couplable" refers to an object that is intended to be coupled and released through numerous cycles with relatively little or no plastic deformation. Accordingly, the term "releasably couplable" can refer to a snap fit, a slip fit, a magnetic connection, a lock interface (e.g., a spring-loaded pin, a lever lock, etc.).

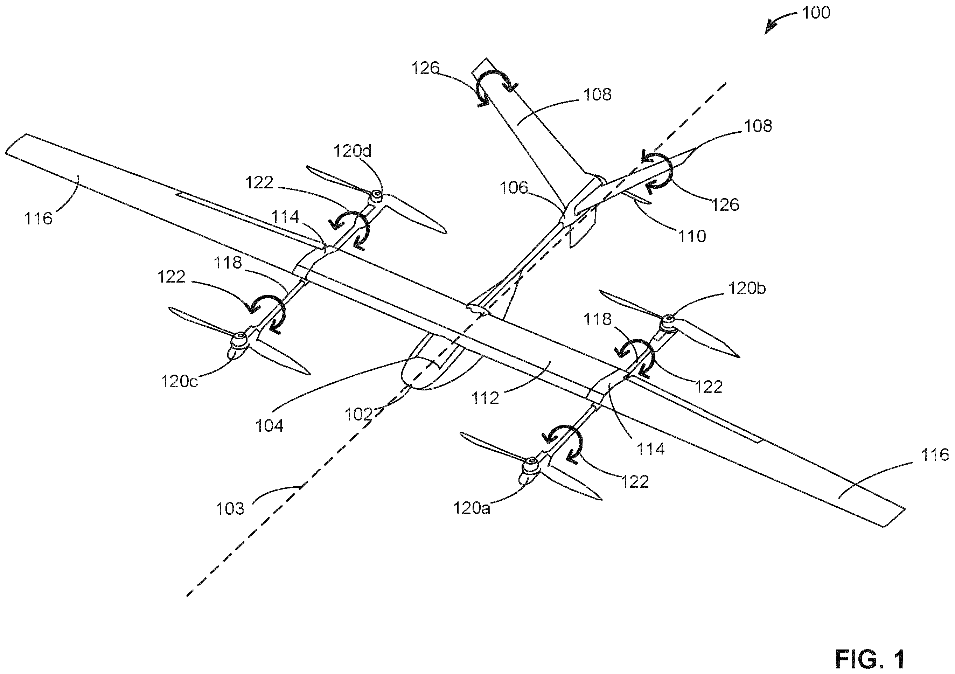

FIG. 1 is an example UAV 100 in accordance with teachings of this disclosure. The UAV 100 is modular and adaptable to enable adjustments that can allow customization associated with different performance requirements. In particular, different components of the UAV 100 can be easily swapped to vary functionality of the UAV 100. Thus, the UAV 100 can be adapted for a wide range of application and/or flight needs.

The UAV 100 of the illustrated example includes a fuselage 102, which carries fuel and at least one payload. The fuselage 102 defines a longitudinal axis 103 and includes a controller 104. Further, the example fuselage 102 is operatively coupled to a tail boom 106 that supports rudder-elevators (e.g., a combined rudder and elevator, a combined rudder-elevator, etc.) 108, which are also known as ruddervators, and a tail motor 110. In some examples, including the illustrated example, the fuselage 102 is coupled to a wing support frame 112 having respective distal ends 114. In some examples, including this example, the distal ends 114 support releasably couplable wings 116, as well as booms (e.g., motor booms, wing booms, etc.) 118 that, in turn, support motors 120 (hereinafter the motors 120a, 120b, 120c, 120d, etc.). In some examples, including this example, the booms 118 extend parallel or generally parallel (e.g., within five degrees) to the aforementioned longitudinal axis 103 and do not support batteries and/or a power source for the motors 120a, 120b, 120c, 120d. In other examples, the booms 118 are angled from the longitudinal axis 103 (e.g., 10 to 15 degrees from the longitudinal axis 103). Further, each of the booms 118 supports ones of the motors 120 at opposite sides of the wing support frame 112 and/or the corresponding wing(s) 116.

To move the UAV 100, the tail motor 110 of the illustrated example is controlled to propel the UAV 100 forward. Further, the motors 120a, 120b, 120c, 120d are operated to vary a lift of the UAV 100 during flight. For example, at least one of the motors 120a, 120b, 120c, 120d is operated to maneuver the UAV 100. In some examples, the motors 120a, 120b, 120c, 120d are utilized for hovering. Additionally or alternatively, the motors 120a, 120b, 120c, 120d are utilized for vertical takeoff, such as vertical take-off and landing (VTOL) or short take-off and landing (STOL) functionality.

To increase a maneuverability of UAVs such as the example UAV 100, the rudder-elevators 108 can be rotated, as generally indicated by double arrows 126, for example. Additionally or alternatively, an orientation of at least one of the motors 120a, 120b, 120c, 120d can be adjusted, as generally indicated by double arrows 122. In particular, in some such examples, the motors 120a, 120b, 120c, 120d are swiveled during flight of the UAV 100.

To increase a range and fuel efficiency of the UAV 100, a wingspan of the UAV 100 can range from 4.85 m to 5.05 m (e.g., 4.95 m in length). In some examples, including this example, the wingspan is defined as a distance between distal outer ends of the wings 116 and, thus, can include a width of the wing support frame 112. Further, a length of the fuselage can range from 2.03m to 2.23 m (e.g., 2.13m). These example dimensions can be advantageous in operating the UAV 100 in terms of fuel efficiency and range.

To enable the UAV 100 to be adaptable and/or modular, the wings 116 are releasably couplable to the wing support frame 112. In particular, the wings 116 can be exchanged, replaced and/or swapped for wings that are better suited for another application and/or mission requirement. For example, the wings 116 can be swapped with a shorter wing (i.e., a decreased wingspan) for faster flight or a longer wing (i.e., an increased wingspan) for gliding, thereby enabling a great degree of versatility of the UAV 100. In other words, different wings can be selected for different functions and/or performance requirements. As a result of this flexibility, an operator may purchase and maintain a reduced number of operational UAVs, thereby saving expenses and costs associated with a large fleet of UAVs. Moreover, the replaceability of the wings 116 enables a damaged wing to be replaced and, thus, increases a service life of the UAV 100.

In some examples, the wing support frame 112 is releasably couplable to the fuselage 102. Further, the rudder-elevators 108 are releasably couplable to the fuselage 102 and/or the tail boom 106. In some examples, the booms 118 are at least partially composed of carbon fiber. Additionally or alternatively, the wings 116, the fuselage 102, the wing support frame 112, the tail boom 106 and/or the rudder-elevators 108 are at least partially composed of carbon fiber.

In some examples, the booms 118 are rotatable (e.g., rotatable along an axis parallel to the longitudinal axis 103). In some example UAVs, including this example UAV 100, the UAV can weigh less than 90 kilograms (kg). Further, the UAV 100 can have a hover duration of 90 seconds (or approximately 90 seconds) and a sortie duration of 4 hours (or approximately 4 hours). The example UAV 100 also includes an airframe mass of 19.5 kg (or approximately 19.5 kg) and can carry a payload weight of 2 kg (or approximately 2 kg). Further, the example UAV 100 has a maximum speed of 100 km/h (54 knots) or approximately 100 km/h (54 knots), and can withstand wind speeds of 46 km/h (25 knots) or approximately 46 km/h (25 knots).

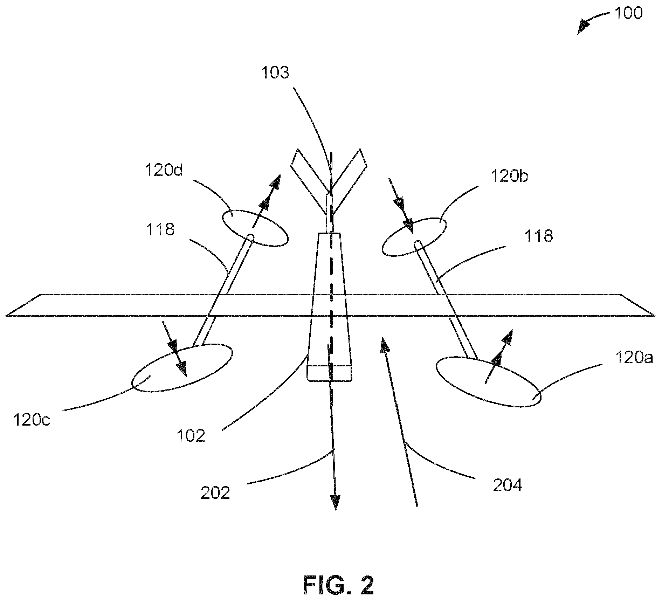

FIG. 2 depicts an example rotor configuration that can be implemented in examples disclosed herein. As can be seen in the illustrated example of FIG. 2, the UAV 100 is shown with the motors 120a, 120b, 120c, 120d being simultaneously operated (e.g., operated at independent speeds and/or rotational orientations). In some examples, including this example, an arrow 202 depicts a direction of flight while an arrow 204 depicts a direction of air flow.

In operation, the motors 120a and 120d move the UAV 100 forward while the motors 120b and 120c move the UAV 100 backward. In some examples, including this example, the motors 120a and 120d are angled upward from the ground while the motors 120b and 120c are angled downward toward the ground.

In some examples, the motors 120a, 120b, 120c, 120d can be swiveled and/or re-oriented during flight or hover of the UAV 100 (e.g., the motors 120a, 120b, 120c, 120d are rotated via an actuator, motor and/or solenoid). This movement of the motors 120a, 120b, 120c, 120d can enable increase lateral movement and/or turning of the UAV 100. The booms 118 are configured to be swiveled and/or rotated relative to the fuselage 102 and/or the wings 116. Further, the motors 120a, 120b, 120c, 120d can be operated speeds different from one another to enhance maneuverability of the UAV 100.

While four of the motors 120 are shown in connection with the UAV 100, any appropriate number of the motors 120 can be implemented instead (e.g., six, ten, twenty, one hundred, etc.). In some examples, the example UAV 100 has a wingspan of approximately 5 m, and may be 4.940 m. In some examples, the height the UAV 100 is approximately 0.6 m and may be 0.622 m. In some examples, a length of the UAV 100 is approximately 2 m, and may be 2.03850 m. In some examples, including this example, the UAV 100 is being assembled and/or prepared for flight. In particular, the UAV 100 has been previously disassembled to facilitate shipping. Now that the UAV 100 has been shipped, the UAV 100 will be configured to perform a mission.

At block 702, the wing support frame 112 is coupled to the fuselage 102. In some examples, the wing support frame 112 is releasably coupled to the fuselage 102. In other examples, the wing support frame 112 is bonded, adhered and/or welded to the fuselage 102.

At block 704, in some examples, the wing boom 118 is coupled to the wing support frame 112. In some examples, including this example, the boom 118 is releasably coupled to the wing support frame 112. In other examples, the boom 118 is integral (e.g., pre-assembled) to the wing support frame 112.

At block 706, the wing 116 is coupled to the distal end 114 of the wing support frame 112. In some examples, including this example, the wing support frame 112 defines at least a portion of a wingspan of the UAV 100. In some examples, the wing 116 is replaced with another wing based on a performance and/or mission requirement(s).

At block 708, the tail boom 106 is coupled to the fuselage 102. In some examples, the tail boom is releasably coupled to the fuselage 102. In other examples, the tail boom 106 is foldable relative to the fuselage 102.

At block 710, the rudder-elevator 108 is coupled to the tail boom 106 and/or the fuselage 102 and the method 700 ends. In some examples, including this example, the rudder-elevator 108 is releasably couplable to the tail boom 106 and/or a frame associated with the tail boom 106 via a slip fit. In some examples, a lock pin (e.g., a spring-loaded lock pin) is implemented to retain or hold the rudder-elevator 108 to the tail boom 106.

In a first example, not explicitly claimed by the appended claims, there is provided an unmanned aerial vehicle (UAV) including a fuselage that extends along a longitudinal axis, a wing support frame extending from the fuselage and along a wingspan of the UAV. The wing support frame includes distal ends to support a releasably couplable wing, the releasably couplable wing to extend along the wingspan when coupled to the wing support frame, and a motor boom that extends parallel to the longitudinal axis, the motor boom to support a motor that is oriented to generate lift for the UAV.

The UAV may further include a releasably couplable tail boom. Further , the tail boom may support a combined rudder-elevator. Further, the combined rudder-elevator may swivel relative to the tail boom. The combined rudder-elevator may be releasably couplable to the tail boom.

The UAV may have a wingspan of 4.85 to 5.05 meters or approximately 4.85 to 5.05 meters.

The motor boom may releasably couplable to the wing support frame.

The motor boom may be integral with the wing support frame.

The motor may be a first a motor, and the motor boom may supports a second motor on an opposite side of the wing support frame from the first motor.

Further, the first motor may be oriented in a direction opposing an orientation of the second motor.

The first motor may be directed downward toward the ground and the second motor is directed upward away from the ground.

In another example, not explicitly claimed by the appended claims, there is provided a method including coupling a fuselage that extends along a longitudinal axis to a wing support frame, the wing support frame extending from the fuselage and along a wingspan of an unmanned aerial vehicle (UAV), and coupling a wing to a distal end of the wing support frame, the wing to be releasably coupled to the wing support frame at the distal end, the distal end to support a motor boom that is parallel to the longitudinal axis.

The method may further include coupling the motor boom to the wing support frame.

The method may further include coupling a tail boom to the fuselage.

The method may further include coupling a combined rudder/elevator to the fuselage.

Further, coupling the combined rudder/elevator to the fuselage may include a slip fit.

Additionally, or alternatively, coupling the combined rudder/elevator to the fuselage may include use of a spring-loaded pin.

The method may further include orienting a first motor of a motor boom coupled to the distal end of the distal frame support toward the ground, and orienting a second motor of the motor boom away from the ground.

The wing may include a first wing that corresponds to a first performance requirement, and the method may further include exchanging the first wing with a second wing that corresponds to a second performance requirement different from the first performance requirement.

The fuselage may be releasably coupled to the wing support frame.

From the foregoing, it will be appreciated that example methods, apparatus and articles of manufacture have been disclosed that enable a highly adaptable UAV that is light weight, cost-effective and fuel efficient. Examples disclosed herein enable UAVs to be adapted for different performance and/or mission requirements, thereby reducing a need to purchase, maintain and store many different types of UAVs.

Although certain example methods, apparatus and articles of manufacture have been disclosed herein, the scope of coverage of this patent is not limited thereto. On the contrary, this patent covers all methods, apparatus and articles of manufacture falling within the scope of the appended claims.

## Claims

1. An unmanned aerial vehicle (UAV) (100) comprising:
a fuselage (102) that extends along a longitudinal axis;
a releasably couplable wing (116);
a motor (120);
a motor boom (118) configured to support the motor (120), wherein the motor boom (118) is configured to be swivelled and/or rotated relative to the fuselage (102) and/or relative to the releasably couplable wing (116);
a wing support frame (112) extending from the fuselage (102) and along a wingspan of the unmanned aerial vehicle (100), the wing support frame (112) having distal ends (114) to support:
the releasably couplable wing (116), the releasably couplable wing (116) to extend along the wingspan when coupled to the wing support frame (112), and
the motor boom (118) such that the motor boom (118) extends parallel to the longitudinal axis and supports the motor (120) such that the motor (120) is oriented to generate lift for the unmanned air vehicle (100); and
a releasably couplable tail boom (106), wherein the tail boom (106) supports a combined rudder-elevator (108), and wherein the combined rudder-elevator (108) swivels relative to the tail boom (106).

2. The unmanned aerial vehicle (100) of claim 1, wherein the motor (120) is configured to be swivelled and/or re-oriented during flight or hover of the unmanned aerial vehicle (100).

3. The unmanned aerial vehicle (100) as defined in claim 1 or claim 2, wherein the combined rudder-elevator (108) is releasably couplable to the tail boom (106).

4. The unmanned aerial vehicle (100) as defined in any of claims 1 to 3, wherein the motor boom (118) is releasably couplable to the wing support frame (112) or is integral with the wing support frame (112).

5. The unmanned aerial vehicle (100) as defined in any of claims 1-4, wherein the motor (120) is a first motor (120a), and wherein the motor boom (118) supports a second motor (120b) on an opposite side of the wing support frame (112) from the first motor (120a).

6. The unmanned aerial vehicle (100) as defined in claim 5, wherein the first motor (120a) is oriented in a direction opposing an orientation of the second motor (120b), or directed downward toward the ground and the second motor (120b) is directed upward away from the ground.

7. The unmanned aerial vehicle (100) as defined in any preceding claim, wherein a length of the fuselage (102) can range from 2.03m to 2.23 m.

8. The unmanned aerial vehicle (100) as defined in any preceding claim, wherein the motor boom (118) is at least partially composed of carbon fiber; and/or the wings (116), the fuselage (102), the wing support frame (112), the tail boom (106) and/or the rudder-elevator (108) are at least partially composed of carbon fiber.

9. The unmanned aerial vehicle (100) as defined in any preceding claim, wherein at least one of:
the unmanned aerial vehicle (100) includes a wingspan of approximately 4.85 to 5.05 meters;
the weight of the unmanned aerial vehicle (100) is less than 90kg; and
the unmanned aerial vehicle (100) has an airframe mass of approximately 19.5kg and can carry a payload weight of approximately 2kg.

10. A method comprising:
coupling a fuselage (102) that extends along a longitudinal axis to a wing support frame (112), the wing support frame (112) extending from the fuselage (102) and along a wingspan of an unmanned aerial vehicle (UAV) (100);
coupling a wing (116) to a distal end (114) of the wing support frame (112), the wing (116) to be releasably coupled to the wing support frame (112) at the distal end (114), the distal end (114) to support a motor boom (118) that is parallel to the longitudinal axis; coupling the motor boom (118) to the wing support frame (112), wherein the motor boom (118) supports a motor (120), and wherein the motor boom (118) is configured to be swivelled and/or rotated relative to the fuselage (102) and/or the wing (116);
coupling a tail boom (106) to the fuselage (102); and
coupling a combined rudder-elevator (108) to the fuselage (102), wherein the combined rudder-elevator (108) swivels relative to the tail boom (106).

11. The method as defined in claim 10, wherein the motor (120) is configured to be swivelled and/or re-oriented during flight or hover of the unmanned aerial vehicle (100); and/or the combined rudder-elevator (108) is releasably couplable to the tail boom (106).

12. The method as defined in claim 10 or claim 11, wherein coupling the combined rudder-elevator (108) to the fuselage (102) includes at least one of a slip fit or use of a spring-loaded pin.

13. The method as defined in any of claims 10 to 12, wherein the motor (120) is a first motor (120a), and the method further includes orienting the first motor (102a) of the motor boom (118) coupled to the distal end (114) of the distal frame support toward the ground, and orienting a second motor (120b) of the motor boom (118) away from the ground.

14. The method as defined in any of claims 10-13, wherein the wing (116) includes a first wing that corresponds to a first performance requirement, and further including exchanging the first wing with a second wing that corresponds to a second performance requirement different from the first performance requirement.

15. The method as defined in any of claims 10-14, wherein the fuselage (102) is releasably coupled to the wing support frame (112).

## Patentansprüche

1. Unbemanntes Luftfahrzeug (UAV) (100), umfassend:
einen Rumpf (102), der sich entlang einer Längsachse erstreckt;
einen lösbar anschließbaren Flügel (116);
einen Motor (120);
einen Motorausleger (118), der konfiguriert ist, um den Motor (120) zu tragen, wobei der Motorausleger (118) konfiguriert ist, um relativ zum Rumpf (102) und/oder relativ zum lösbar anschließbaren Flügel (116) geschwenkt und/oder gedreht zu werden;
einem Flügelstützrahmen (112), der sich vom Rumpf (102) und über eine Spannweite des unbemannten Luftfahrzeugs (100) erstreckt, wobei der Flügelstützrahmen (112) distale Enden (114) aufweist, um
den lösbar anschließbaren Flügel (116) zu tragen, wobei sich der lösbar anschließbare Flügel (116), wenn er mit dem Flügelstützrahmen (112) verbunden ist, über die Spannweite erstreckt, und
den Motorausleger (118) so zu tragen, dass sich der Motorausleger (118) parallel zur Längsachse erstreckt und den Motor (120) so trägt, dass der Motor (120) ausgerichtet ist, um Auftrieb für das unbemannte Luftfahrzeug (100) zu erzeugen; und
einen lösbar anschließbaren Heckausleger (106), wobei der Heckausleger (106) ein kombiniertes Seiten-Höhenruder (108) trägt und wobei das kombinierte Seiten-Höhenruder (108) relativ zum Heckausleger (106) schwenkbar ist.

2. Unbemanntes Luftfahrzeug (100) nach Anspruch 1, bei dem der Motor (120) konfiguriert ist, um während des Fluges oder des Schwebens des unbemannten Luftfahrzeugs (100) geschwenkt und/oder neu ausgerichtet zu werden.

3. Unbemanntes Luftfahrzeug (100) nach Anspruch 1 oder 2, bei dem das kombinierte Seiten-Höhenruder (108) lösbar an den Heckausleger (106) anschließbar ist.

4. Unbemanntes Luftfahrzeug (100) nach einem der Ansprüche 1 bis 3, bei dem der Motorausleger (118) an den Flügelstützrahmen (112) lösbar anschließbar oder einteilig mit dem Flügelstützrahmen (112) ausgebildet ist.

5. Unbemanntes Luftfahrzeug (100) nach einem der Ansprüche 1 bis 4, bei dem der Motor (120) ein erster Motor (120a) ist und der Motorausleger (118) einen zweiten Motor (120b) auf einer dem ersten Motor (120a) gegenüberliegenden Seite des Flügelstützrahmens (112) trägt.

6. Unbemanntes Luftfahrzeug (100) nach Anspruch 5, bei dem der erste Motor (120a) in einer Richtung entgegengesetzt zu einer Ausrichtung des zweiten Motors (120b) ausgerichtet ist oder nach unten zum Boden hin gerichtet ist, während der zweite Motor (120b) nach oben vom Boden weg gerichtet ist.

7. Unbemanntes Luftfahrzeug (100) nach einem der vorhergehenden Ansprüche, bei dem eine Länge des Rumpfes (102) zwischen 2,03 m und 2,23 m betragen kann.

8. Unbemanntes Luftfahrzeug (100) nach einem der vorhergehenden Ansprüche, bei dem der Motorausleger (118) zumindest teilweise aus Kohlefaser besteht; und/oder die Flügel (116), der Rumpf (102), der Flügelstützrahmen (112), der Heckausleger (106) und/oder das Seiten-Höhenruder (108) zumindest teilweise aus Kohlefaser bestehen.

9. Unbemanntes Luftfahrzeug (100) nach einem der vorhergehenden Ansprüche, bei dem:
das unbemannte Luftfahrzeug (100) eine Spannweite von etwa 4,85 bis 5,05 Metern hat;
das Gewicht des unbemannten Luftfahrzeugs (100) weniger als 90 kg beträgt; und/oder
das unbemannte Luftfahrzeug (100) eine Flugzeugzellenmasse von etwa 19,5 kg aufweist und eine Nutzlast von etwa 2 kg tragen kann.

10. Verfahren, umfassend:
Anschließen eines Rumpfes (102), der sich entlang einer Längsachse erstreckt, an einen Flügelstützrahmen (112), wobei sich der Flügelstützrahmen (112) vom Rumpf (102) und entlang einer Spannweite eines unbemannten Luftfahrzeugs (UAV) (100) erstreckt;
Anschließen eines Flügels (116) an ein distales Ende (114) des Flügelstützrahmens (112), wobei der Flügel (116) lösbar an das distale Ende (114) des Flügelstützrahmens (112) angeschlossen ist, wobei das distale Ende (114) einen Motorausleger (118) trägt, der parallel zur Längsachse verläuft;
Anschließen des Motorauslegers (118) an den Flügelstützrahmen (112), wobei der Motorausleger (118) einen Motor (120) trägt, und wobei der Motorausleger (118) relativ zum Rumpf (102) und/oder zum Flügel (116) schwenkbar und/oder drehbar konfiguriert ist;
Anschließen eines Heckauslegers (106) an den Rumpf (102); und
Anschließen eines kombinierten Seiten-Höhenruders (108) an den Rumpf (102), wobei das kombinierte Seiten-Höhenruder (108) relativ zum Heckausleger (106) schwenkbar ist.

11. Verfahren nach Anspruch 10, bei dem der Motor (120) konfiguriert ist, während des Fluges oder Schwebens des unbemannten Luftfahrzeugs (100) geschwenkt und/oder neu ausgerichtet zu werden; und/oder das kombinierte Ruder-Höhenruder (108) lösbar an den Heckausleger (106) anschließbar ist.

12. Verfahren nach Anspruch 10 oder 11, bei dem das Anschließen des kombinierten Ruder-Höhenruders (108) an den Rumpf (102) eine Gleitpassung oder die Verwendung eines federbelasteten Stifts umfasst.

13. Verfahren nach einem der Ansprüche 10 bis 12, bei dem der Motor (120) ein erster Motor (120a) ist und das Verfahren ferner umfasst: Ausrichten des ersten Motors (102a) des mit dem distalen Ende (114) der distalen Rahmenhalterung verbundenen Motorauslegers (118) in Richtung zum Boden, und Ausrichten eines zweiten Motors (120b) des Motorauslegers (118) weg vom Boden.

14. Verfahren nach einem der Ansprüche 10 bis 13, bei dem der Flügel (116) einen ersten Flügel umfasst, der einer ersten Leistungsanforderung entspricht, und das ferner das Austauschen des ersten Flügels gegen einen zweiten Flügel umfasst, der einer zweiten Leistungsanforderung entspricht, die sich von der ersten Leistungsanforderung unterscheidet.

15. Verfahren nach einem der Ansprüche 10 bis 14, bei dem der Rumpf (102) lösbar mit dem Flügelstützrahmen (112) verbunden ist.

## Revendications

1. Véhicule aérien sans pilote (UAV) (100), comprenant :
un fuselage (102) qui s'étend le long d'un axe longitudinal ;
une aile pouvant être couplée de manière amovible (116) ;
un moteur (120) ;
une flèche de moteur (118) configurée pour supporter le moteur (120), dans lequel la flèche de moteur (118) est configurée pour être pivotée et/ou tournée par rapport au fuselage (102) et/ou par rapport à l'aile pouvant être couplée de manière libérable (116) ;
un cadre de support d'aile (112) s'étendant à partir du fuselage (102) et le long d'une envergure du véhicule aérien sans pilote (100), le cadre de support d'aile (112) présentant des extrémités distales (114) pour supporter :
l'aile pouvant être couplée de manière amovible (116), l'aile pouvant être couplée de manière amovible (116) pour s'étendre le long de l'envergure lorsqu'elle est couplée au cadre de support d'aile (112), et
la flèche de moteur (118) de telle sorte que la flèche de moteur (118) s'étende parallèlement à l'axe longitudinal et supporte le moteur (120) de telle sorte que le moteur (120) soit orienté pour générer une portance pour le véhicule aérien sans pilote (100) ; et
une flèche de queue pouvant être couplée de manière amovible (106), dans laquelle la flèche de queue (106) supporte un combiné gouverne-élévateur (108), et dans lequel le combiné gouverne-élévateur (108) pivote par rapport à la flèche de queue (106).

2. Véhicule aérien sans pilote (100) selon la revendication 1, dans lequel le moteur (120) est configuré pour être pivoté et/ou réorienté pendant un vol ou un vol stationnaire du véhicule aérien sans pilote (100).

3. Véhicule aérien sans pilote (100) selon la revendication 1 ou la revendication 2, dans lequel le combiné gouverne-élévateur (108) peut être couplé de manière libérable à la flèche de queue (106).

4. Véhicule aérien sans pilote (100) selon l'une quelconque des revendications 1 à 3, dans lequel la flèche de moteur (118) peut être couplée de manière amovible au cadre de support d'aile (112) ou est solidaire du cadre de support d'aile (112).

5. Véhicule aérien sans pilote (100) selon l'une quelconque des revendications 1 à 4, dans lequel le moteur (120) est un premier moteur (120a), et dans lequel la flèche de moteur (118) supporte un second moteur (120b) sur un côté opposé du cadre de support d'aile (112) par rapport au premier moteur (120a).

6. Véhicule aérien sans pilote (100) selon la revendication 5, dans lequel le premier moteur (120a) est orienté dans une direction opposée à une orientation du second moteur (120b), ou dirigé vers le bas en direction du sol et le second moteur (120b) est dirigé vers le haut à l'opposé du sol.

7. Véhicule aérien sans pilote (100) selon l'une quelconque des revendications précédentes, dans lequel une longueur du fuselage (102) peut aller de 2,03 m à 2,23 m.

8. Véhicule aérien sans pilote (100) selon l'une quelconque des revendications précédentes, dans lequel la flèche de moteur (118) est au moins partiellement composée de fibres de carbone ; et/ou les ailes (116), le fuselage (102), le cadre de support d'aile (112), la flèche de queue (106) et/ou le combiné gouverne/élévateur (108) sont au moins partiellement composés de fibres de carbone.

9. Véhicule aérien sans pilote (100) selon l'une quelconque des revendications précédentes, dans lequel :
le véhicule aérien sans pilote (100) comprend une envergure d'environ 4,85 à 5,05 mètres ; et/ou
le poids du véhicule aérien sans pilote (100) est inférieur à 90 kg ; et/ou
le véhicule aérien sans pilote (100) présente une masse de cellule d'environ 19,5 kg et peut transporter une charge utile d'environ 2 kg.

10. Procédé, comprenant les étapes consistant à :
coupler un fuselage (102) qui s'étend le long d'un axe longitudinal à un cadre de support d'aile (112), le cadre de support d'aile (112) s'étendant à partir du fuselage (102) et le long d'une envergure d'un véhicule aérien sans pilote (UAV) (100) ;
coupler une aile (116) à une extrémité distale (114) du cadre de support d'aile (112), l'aile (116) devant être couplée de manière amovible au cadre de support d'aile (112) au niveau de l'extrémité distale (114), l'extrémité distale (114) étant destinée à supporter une flèche de moteur (118) qui est parallèle à l'axe longitudinal ;
coupler la flèche de moteur (118) au cadre de support d'aile (112), dans lequel la flèche de moteur (118) supporte un moteur (120), et dans lequel la flèche de moteur (118) est configurée pour être pivotée et/ou tournée par rapport au fuselage (102) et/ou à l'aile (116) ;
coupler une flèche de queue (106) au fuselage (102) ; et
coupler un combiné gouverne-élévateur (108) au fuselage (102), dans lequel le combiné gouverne-élévateur (108) pivote par rapport à la flèche de queue (106).

11. Procédé selon la revendication 10, dans lequel le moteur (120) est configuré pour être pivoté et/ou réorienté pendant un vol ou un vol stationnaire du véhicule aérien sans pilote (100) ; et/ou le combiné gouverne-élévateur (108) peut être couplé de manière amovible à la flèche de queue (106).

12. Procédé selon la revendication 10 ou la revendication 11, dans lequel le couplage du combiné gouverne-élévateur (108) au fuselage (102) inclut au moins un ajustement glissant ou l'utilisation d'une goupille chargée par ressort.

13. Procédé selon l'une quelconque des revendications 10 à 12, dans lequel le moteur (120) est un premier moteur (120a), et le procédé inclut en outre l'étape consistant à orienter le premier moteur (102a) de la flèche de moteur (118) couplé à l'extrémité distale (114) du support de cadre distal vers le sol, et orienter un second moteur (120b) de la flèche de moteur (118) à l'opposé du sol.

14. Procédé selon l'une quelconque des revendications 10 à 13, dans lequel l'aile (116) inclut une première aile qui correspond à une première exigence de performance, et incluant en outre un échange de la première aile avec une seconde aile qui correspond à une seconde exigence de performance différente de la première exigence de performance.

15. Procédé selon l'une quelconque des revendications 10 à 14, dans lequel le fuselage (102) est couplé de manière amovible au cadre de support d'aile (112).
